# EUROPEAN PATENT SPECIFICATION

(11) **EP 1 322 887 B1**
(45) Date of publication and mention of the grant of the patent: **17.11.2004**
(21) Application number: 01976626.0
(22) Date of filing: 27.09.2001
(51) Int. Cl.: F16L 58/10, F16L 57/00

(54) **PROTECTIVE SHEATH**
SCHUTZHÜLSE
GAINE DE RECOUVREMENT

(30) Priority: 06.10.2000 IT MI20000564 U
(43) Date of publication of application: 02.07.2003
(73) Proprietor: Mazzer Materie Plastiche di Giacomo Ezio Mazzer & C. S.N.C., 22037 Ponte Lambro (IT)
(72) Inventor: MAZZER, Giacomo, Ezio, I-22036 Erba (IT)
(74) Representative: Carloni, Franco
(86) International application number: PCT/IT2001/000496
(87) International publication number: WO 2002/029307

(56) References cited:
- WO-A-99/46534
- US-A- 3 616 123
- US-A- 3 913 625
- US-A- 4 791 966

## Description

### TECHNICAL FIELD

The present invention generally relates to a sheath intended to cover for protective purposes a flexible tube or hose of the kind used for conveying a working fluid in a hydraulic or pneumatic circuit, in addition to flexible tubes of other kind.

### BACKGROUND ART

The use of protective sheaths to cover flexible tubes or hoses conveying a working fluid by which actuates hydraulic or pneumatic devices of a piece of equipment is known in the art. Generally, the sheaths consist of a rather flexible strip of plastic material that is helically wound around the outer surface of the flexible tubes. Their main object is to protect the flexible tubes from wear consequent to the continued action of friction occurring, for example, when the movable members of a piece of equipment rub against the flexible tubes during their movement relative thereto.

Because the pieces of equipment whereon hydraulic or pneumatic devices are installed frequently operate in extreme working conditions as to the mechanical and thermal stresses, the protective sheaths must provide, apart from a good resistance to abrasion, also a good resistance to flame, i.e. the plastic material which the sheath is made from should be as much possible a flame retardant material.

Another feature the protective sheaths should have is to be electrically conductive so as to permit the electrostatic charges which form locally on surface portions of the flexible tube caused by a frictional electrification phenomenon when a working fluid having insulating properties is passed therethrough to be dissipated to earth. These electrostatic charges, if not suitably dissipated, may accumulate in such an amount that they generate a high electric potential gradient with respect to earth and produce dangerous electric discharges through the working ambient air. For this reason, the material the protective sheath is made from should have an electrical resistance per unit length not greater than a fixed value that is established by International Standards so as to effectively dissipate the electrostatic charges.

For the purpose of making the sheaths electrically conductive, these comprise a portion of electrically conductive material, for example in the form of a conductive wire or strip which follows the helical path of the sheath along the entire length thereof and is kept in contact with the outer surface of the flexible tube when the sheath is wound thereon.

However, the sheaths of the above-mentioned kind one of which is disclosed in document WO 99/46534, suffer from some disadvantages among which are to be mentioned the high cost of the electrically conductive wire or strip, the reduced flexibility of the sheath due to the presence of the electrically conductive wire or strip and the high manufacturing cost of the sheath.

. Another disadvantage of the protective sheath of the above-mentioned kind relates to the fact that with conventional manufacturing process a portion of the electrically conductive wire or strip intended to contact the outer surface of the tube may be covered by the insulating plastic material of the sheath, wherefore the insulating plastic material is interposed between the outer surface of the flexible tube and the electrically conductive wire or strip and negatively affects capability of the sheath to dissipate the electrostatic charges locally formed on the outer surface portions of the flexible tube.

### DISCLOSURE OF THE INVENTION

The object of the present invention is to provide a protective sheath with improved features as regards its capability to resist abrasion and flame and to be electrically conductive, and adapted to assure in operation a degree of safety and reliability greater than that obtainable with the prior art protective sheaths which are available on the market.

According to the present invention, the protective sheath intended to cover a flexible tube used for the conveyance of a working fluid to an hydraulic or pneumatic device is formed of a strip which is helically wound around the outer surface of the flexible tube and is characterised in that said strip comprises:
- a core of electrically insulating and flame retardant material, and
- a core-covering layer of electrically conductive and flame retardant material having a first surface portion intended to contact the outer surface of the flexible tube and a second surface portion opposite to said first surface portion and forming the on sight surface of the strip when it is wound around the flexible tube,
- said core-covering layer of electrically conductive material being intended to dissipate the electrostatic charges which are formed on the outer surface of the flexible tube and to protect said outer surface of the flexible tube from wear and flame by performing a flame retardant action.

### BRIEF DESCRIPTION OF DRAWINGS

The present invention will be now described with reference to the accompanying drawings, wherein:
Figure 1 is a partial side elevation view of a flexible tube used for the conveyance of a working fluid in an hydraulic or pneumatic circuit with the protective sheath according to the present invention wound thereon,
Figure 2 is a partial side elevation view of the protective sheath of the present invention,
Figure 3 is a partial side elevation view of another embodiment of the protective sheath of the present invention, and
Figure 4 is a cross-section view of the strip forming the protective sheath of the present invention.

### BEST MODE FOR CARRYING OUT THE INVENTION

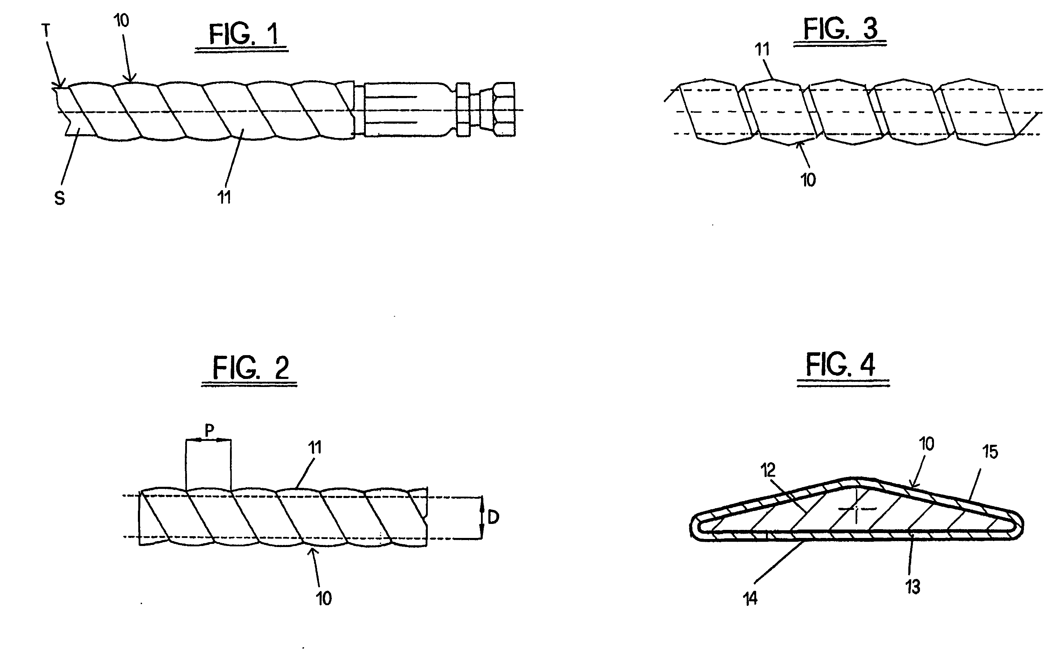

Referring to Figures 1,2 and 3 of the drawings, there is shown the protective sheath of the present invention. The protective sheath consists of strip 10 having in cross-section various different shapes which is helically wound around a flexible tube T and contacts the outer surface S thereof. The protective sheath comprises a plurality of adjacent coils 11 which may be in contact one with the other as shown in Figure 2 or, alternatively, be separated one from the other by a gap as shown in Figure 3. The pitch of the coils depends on the internal diameter D of the sheath and generally increases therewith.

Referring to Figure 4 of the drawings, there is shown a possible shape of the cross-section of the strip 10 forming the protective sheath of the invention. As shown, the strip 10 comprises a core 12 and a core-covering layer 13 both formed of a flame retardant plastic material capable of protecting the flexible tube from wear caused by friction and from flame by performing a flame retardant action. Preferable plastic materials that may be used are polyethylene, polypropylene or plastic materials of other type.

In order to make the core-covering layer 13 electrically conductive, the plastic material thereof, according a preferred embodiment ot the invention, comprises substances capable of reducing its electrical resistivity. For example, such substances may comprise additives such as carbon and metal oxide particles or the like. The core-covering layer 13 comprises a first surface portion 14 intended to contact the outer surface S of the flexible tube and an opposite second surface portion 15 forming the on sight surface of the strip when it is wound around the flexible tube. These first and second surface portions 14,15 are connected to each other at the side edges of the strip so that the core-covering layer 13 extends in continuity from the first surface portion 14 to the second surface portion 15 of the strip thereby assuring contact between the conductive core-covering layers of adjacent coils even when the sheath is bent so as to follow the curvature of the flexible tube.

Preferably, although not necessarily, the strip may be of triangular shape in cross-section with rounded corners the base of which forms the first surface portion 14 intended to contact the outer surface of the flexible tube and the other two sides form the second surface portion 15 forming the on sight surface portion of the strip when it is wound around the flexible tube.

The strip 10 forming the protective sheath may be manufactured according to a conventional co-extrusion process.

The thickness of the core-covering layer 13 may vary according to the desired electrical conductivity and wear resistance to be obtained.

In the case the strip is of triangular shape in cross-section, at the apex thereof formed by the two sides of the second surface portion 15 the thickness of the core-covering layer 13 may be increased in order to take into account for the greater wear which this portion is subject to.

### INDUSTRIAL APPLICABILITY

The protective sheath according to the invention offers some advantages over other prior art sheaths.

In particular, a first advantage relates to the fact that the electrical resistance of the sheath is less than that of other sheaths known in the art because the contact between the outer surface S of the flexible tube and the first surface portion 14 of the strip forming the sheath extends along the entire width thereof and is not restricted to a line or a narrow surface as occurs in sheaths provided with an electrically conductive wire o strip. This permits the electrostatic charges formed on the outer surface of the flexible tube to be dissipated via a greater contact surface. Furthermore, since the side edges of adjacent coils of the strip are in contact also when the sheath is bent so as to follow the curvature of the flexible tube or when there is no gap between the coils even if the sheath is not bent, the electrostatic charges may be dissipated not only along the helicoidal path of the protective sheath, but also along a path extending lengthwise thereof. Also this feature greatly improves the ability of the sheath to dissipate the electrostatic charges.

A second advantage is related to the fact that with the conventional manufacturing process there is no risk to interrupt the electrical continuity of the electrically conductive core-covering layer 13 of the strip because this is on the outside of the strip and therefore its inner surface portion 14 always contacts the outer surface S of the flexible tube and moreover it is more easier to check during and after manufacturing.

A third advantage of the protective sheath of the invention relates to the fact that it can be manufactured via a conventional co-extrusion process and the electrical conductive material used for the core-covering layer 13 is less expensive than that used to produce the electrically conductive wire or strips of prior art sheaths

## Claims

1. A protective sheath intended to cover a flexible tube or hose used for the conveyance of a working fluid to an hydraulic or pneumatic device and formed of a strip (10) that is intended to be helically wound around the outer surface(s) of the flexible tube (T), **characterised in that** said strip comprises:
- a core (12) of electrically insulating and flame retardant material, and
- a core-covering layer (13) of electrically conductive and flame retardant material having a first surface portion (14) intended to contact the outer surface of the flexible tube and a second surface portion (15) opposite to said first surface portion (14) and forming the on sight surface of the strip when it is wound around the flexible tube,
said core-covering layer (13) of electrically conductive material being intended to dissipate the electrostatic charges which are formed on the outer surface of the flexible tube and to protect said outer surface of the flexible tube from wear and flame by performing a flame retardant action.

2. A protective sheath according to claim 1, **characterised in that** the core-covering layer (15) of electrically conductive material is formed of a layer which covers in continuity the core (12) of the strip.

3. A protective sheath according to claim 1, **characterised in that** the electrically insulating material forming the core (12) is a flame-retardant plastic material.

4. A protective sheath according to claim 1, **characterised in that** the electrically conductive material forming the core-covering layer (13) is a flame retardant material which is made electrically conductive by means of additives.

5. A protective sheath according to claim 1, **characterised in that** the thickness of the electrically conductive core-covering layer (13) is depending on the desired electrical conductivity and wear resistance.

6. A protective sheath according to claim 1, **characterised in that** the strip (10) is manufactured by means of a co-extrusion process.

7. A protective sheath according to claim 1, **characterised in that** said strip (10) is of triangular shape in cross-section and its corners are rounded, the base thereof forming the surface intended to contact the outer surface of the flexible tube and the other two sides forming the on sight surface of the strip (10).

8. A protective sheath according to claim 1, **characterised in that** the core (12) and the core-covering layer (13) of the strip (10) are of any suitable shape in cross-section.

## Patentansprüche

1. Schutzhülse zur Umhüllung eines biegsamen Rohrs oder Schlauches zum Befördern einer Arbeitsflüssigkeit zu einer hydraulischen oder pneumatischen Vorrichtung und aus einem Band (10) gebildet, das schraubenförmig um eine Außenfläche (S) des biegsamen Rohrs (T) gewickelt wird, **dadurch gekennzeichnet, dass** das Band:
- aus einem Kern (12) aus einem elektrisch leitenden und Flammenverzögerungsmaterial, und
- einer den Kern umhüllenden Schicht (13) aus einem elektrisch leitenden und Flammenverzögerungsmaterial, die einen ersten Oberflächenabschnitt (14) zum Berühren der Außenfläche des biegsamen Rohrs und einen dem ersten Oberflächenabschnitt (14) gegenüberliegenden zweiten Oberflächenabschnitt (15) aufweist, der die Sichtfläche des Bandes bildet, wenn es um das biegsame Rohr gewickelt ist,
besteht,
wobei die den Kern umhüllende Schicht (13) aus elektrisch leitendem Material dazu bestimmt ist, die elektrostatischen Ladungen zu zerstreuen, die sich auf der Außenfläche des biegsamen Rohrs ansammeln, und solche Außenfläche des biegsamen Rohrs vor Abnutzung und Flammen zu schützen, um eine Flammenverzögerung zu entwickeln.

2. Schutzhülse nach Anspruch 1, **dadurch gekennzeichnet, dass** die den Kern umhüllende Schicht (13) aus elektrisch leitendem Material aus einer Schicht gebildet ist, die den Kern (12) des Bandes fortlaufend abdeckt.

3. Schutzhülse nach Anspruch 1, **dadurch gekennzeichnet, dass** das den Kern (12) bildende elektrisch isolierende Material ein Flammenverzögerungskunststoff ist.

4. Schutzhülse nach Anspruch 1, **dadurch gekennzeichnet, dass** das elektrisch leitende Material, das die den Kern umhüllende Schicht (13) bildet, ein Flammenverzögerungsmaterial ist, das durch die Beigabe von Zusatzstoffen elektrisch leitend gemacht wird.

5. Schutzhülse nach Anspruch 1, **dadurch gekennzeichnet, daß** die Stärke der elektrisch leitenden den Kern umhüllende Schicht (13) von der gewünschten elektrischen Leitfähigkeit und von dem Abnutzungswiderstand abhängig ist.

6. Schutzhülse nach Anspruch 1, **dadurch gekennzeichnet, dass** das Band (10) im Koextrusionsverfahren hergestellt wird.

7. Schutzhülse nach Anspruch 1, **dadurch gekennzeichnet, dass** das Band (10) im Querschnitt eine Dreiecksform mit gerundeten Ecken hat, wobei die Basis davon die Fläche zum Berühren der Außenfläche des biegsamen Rohrs bildet und die anderen beiden Seiten die Sichtfläche des Bandes (10) bilden.

8. Schutzhülse nach Anspruch 1, **dadurch gekennzeichnet, dass** der Kern (12) und die den Kern umhüllende Schicht (13) des Bandes (10) eine beliebige Querschnittsform haben können.

## Revendications

1. Gaine de protection destinée à recouvrir un tube ou un tuyau flexible utilisé pour le transport d'un fluide moteur vers un dispositif hydraulique ou pneumatique et formée d'une bande (10) qui est destinée à être enroulée de façon hélicoïdale autour de la surface externe (S) du tube flexible (T), **caractérisée en ce que** ladite bande comprend :
- un noyau (12) en matériau électriquement isolant et ignifuge, et
- une couche recouvrant le noyau (13) en matériau conducteur et ignifuge présentant une première partie de surface (14) destinée à être en contact avec la surface externe du tube flexible et une seconde partie de surface (15) opposée à ladite première partie de surface (14) et formant la surface à vue de la bande lorsqu'elle est enroulée autour du tube flexible.
ladite couche recouvrant le noyau (13) en matériau conducteur étant destinée à dissiper les charges électrostatiques qui sont formées sur la surface externe du tube flexible et à protéger ladite surface externe du tube flexible de l'usure et des flammes en réalisant une action ignifuge.

2. Gaine de protection selon la revendication 1, **caractérisée en ce que** la couche recouvrant le noyau (13) en matériau conducteur est formée d'une couche qui recouvre en continu le noyau (12) de la bande.

3. Gaine de protection selon la revendication 1, **caractérisée en ce que** le matériau électriquement isolant formant le noyau (12) est un matériau en plastique ignifuge.

4. Gaine de protection selon la revendication 1, **caractérisée en ce que** le matériau conducteur formant la couche recouvrant le noyau (13) est un matériau ignifuge qui est rendu conducteur au moyen d'additifs.

5. Gaine de protection selon la revendication 1, **caractérisée en ce que** l'épaisseur de la couche recouvrant le noyau (13) conductrice dépend de la conductivité électrique souhaitée et de la résistance à l'usure.

6. Gaine de protection selon la revendication 1, **caractérisée en ce que** la bande (10) est fabriquée au moyen d'un processus de coextrusion.

7. Gaine de protection selon la revendication 1, **caractérisée en ce que** ladite bande (10) présente une section transversale de forme triangulaire et ses coins sont arrondis, la base de celle-ci formant la surface destinée à être en contact avec la surface externe du tube flexible et les deux autres côtés formant la surface à vue de la bande (10).

8. Gaine de protection selon la revendication 1, **caractérisée en ce que** le noyau (12) et la couche recouvrant le noyau (13) de la bande (10) présentent une section transversale de n'importe quelle forme appropriée.
